# EUROPEAN PATENT APPLICATION

(11) **EP 3 594 551 A1**
(43) Date of publication of application: **15.01.2020**
(21) Application number: 19180602.5
(22) Date of filing: 17.06.2019
(51) Int. Cl.: F16M 11/12, G03B 17/56, F16M 11/18, F16M 11/04, F16M 11/20, F16M 11/24, F16M 13/00

(54) **TRANSFER ADAPTING DEVICE AND SHOOTING STABILIZER**

(30) Priority: 09.07.2018 CN 201821079874 U
(71) Applicant: Shan, Jinghua, Shenzhen, Guangdong 518000 (CN); Peng, Yibing, Shenzhen, Guangdong 518000 (CN)
(72) Inventor: Shan, Jinghua, Shenzhen, Guangdong 518000 (CN); Peng, Yibing, Shenzhen, Guangdong 518000 (CN)
(74) Representative: Li, Xiaolu

(57) **Abstract**

The present disclosure relates to a transfer adapting device and a shooting stabilizer. The transfer adapting device includes an adapting body with a hollow cavity. The adapting body includes a bracket connecting portion disposed on a top of the adapting body and a handle connecting portion disposed on a side of the adapting portion. The bracket connecting portion is connected with a cradle head support, and the handle connecting portion is connected to rotate with a handle. The present disclosure uses the transfer adapting device so that the cradle head support can be folded rotationally to be parallel to the handle when the shooting stabilizer is put away, which greatly shortens an overall length of the shooting stabilizer, reduces the volume, and is convenient to carry and store.

## Description

### TECHNICAL FIELD

The present disclosure relates to a shooting bracket field, in particular to a transfer adapting device and a shooting stabilizer.

### BACKGROUND

A shooting stabilizer is used to support shooting equipment, such as telephones and cameras, to shoot. The shooting stabilizer is generally composed of one to three axes, and each axis correspondingly has a motor to drive and adjust rotation position. Once a balance position of the shooting equipment is off, a central processing unit can analyze feedback signal of a sensor, such as gyroscope of the shooting stabilizer, acceleration, magnetic field and so on. A correcting signal is formed through corresponding correcting algorithm and controls the above motor to correct the balance position.

Most present shooting stabilizers include a handle, a cradle head support disposed on an upper end of the handle and a clamping device disposed on the cradle head support. An overall length of the present shooting stabilizers is a sum of a length of the handle and a length of the cradle head support, which makes the shooting stabilizers occupy too much space to carry, and the shooting stabilizers are inconvenient and unable to stand independently.

### SUMMARY

An object of the present disclosure is to provide a transfer adapting device and a shooting stabilizer to solve the above problem about the present shooting stabilizer occupies too much space to carry and is inconvenient to carry.

A technical solution to solve the technical problem thereof adopted the present disclosure.

The present disclosure provides the transfer adapting device, where the transfer adapting device comprises an adapting body with a hollow cavity. And the adapting body comprises a bracket connecting portion disposed on a top of the adapting body and a handle connecting portion disposed on a side of the adapting body. The bracket connecting portion is connected with a cradle head support and the handle connecting portion is connected to rotate with a handle.

Furthermore, a locking mechanism is disposed on the adapting body and locks the handle.

Furthermore, the locking mechanism comprises a locking tongue and a locking tongue switch disposed on a bottom of the adapting body. The locking tongue is disposed and moving in the hollow cavity of the adapting body and the locking tongue switch locks or unlocks the handle by driving movement of the locking tongue.

The present disclosure further provides the shooting stabilizer and the shooting stabilizer comprises with the handle and the cradle head support, the cradle head support is connected to rotate with the handle by the transfer adapting device.

Furthermore, the shooting stabilizer further comprises a rotary positioning mechanism. The rotary positioning mechanism is disposed between the handle and the transfer adapting device, and locates a rotating position when the handle rotates.

Furthermore, the rotary positioning mechanism comprises at least one spring colliding bead. The spring colliding bead is fixedly disposed on the handle connecting portion.

Furthermore, the rotary positioning mechanism further comprises a friction plate fixedly disposed on the handle. The friction plate provides with at least one concave hole to match with the spring colliding bead.

Furthermore, wherein the handle comprises a handle body and a mounting base disposed at an upper end of the handle body, the transfer adapting device is connected rotationally with a side portion of the mounting base by a rotating shaft. A button key is disposed on a top of the mounting base.

Furthermore, the handle body is a hollow structure and a battery compartment is disposed in the handle body.

Furthermore, the handle body comprises a hinge portion and plurality of arc-shaped handle portions hinged at a lower end of the hinge portion. One end of the battery compartment is fixedly disposed in the hinge portion.

A beneficial effect of the present disclosure is to provide a transfer adapting device. The present disclosure connects the cradle head support on the top of the adapting body through the bracket connecting portion of the transfer adapting device and connects the handle rotationally on the side of the adapting body through the handle connecting portion so that the cradle head support can be folded rotationally to be parallel to the handle when the shooting stabilizer is put away. The present disclosure greatly shortens an overall length of the shooting stabilizer, reduces a volume and is convenient to carry and store.

### BRIEF DESCRIPTION OF DRAWINGS

The present disclosure will be further described below in conjunction with the accompanying drawings and embodiments, wherein:
FIG. 1 is a structural diagram of a transfer adapting device of the present disclosure.
FIG. 2 is a structural diagram showing another angle of the transfer adapting device of the present disclosure.
FIG. 3 is a partial structural explosion diagram of a shooting stabilizer of the present disclosure.
FIG. 4 is a partial structural explosion diagram showing another angle of the shooting stabilizer of the present disclosure.
FIG. 5 is a structural diagram of a use status of the shooting stabilizer of the present disclosure.
FIG. 6 is a structural diagram showing another angle of the status of the shooting stabilizer of the present disclosure.
FIG. 7 is a structural diagram of folding status of the shooting stabilizer of the present disclosure.
FIG. 8 is a structural diagram showing another angle of the folding status of the shooting stabilizer of the present disclosure.

### DETAILED DESCRIPTION

A present disclosure will be further described herein in conjunction with the accompanying drawings and embodiments.

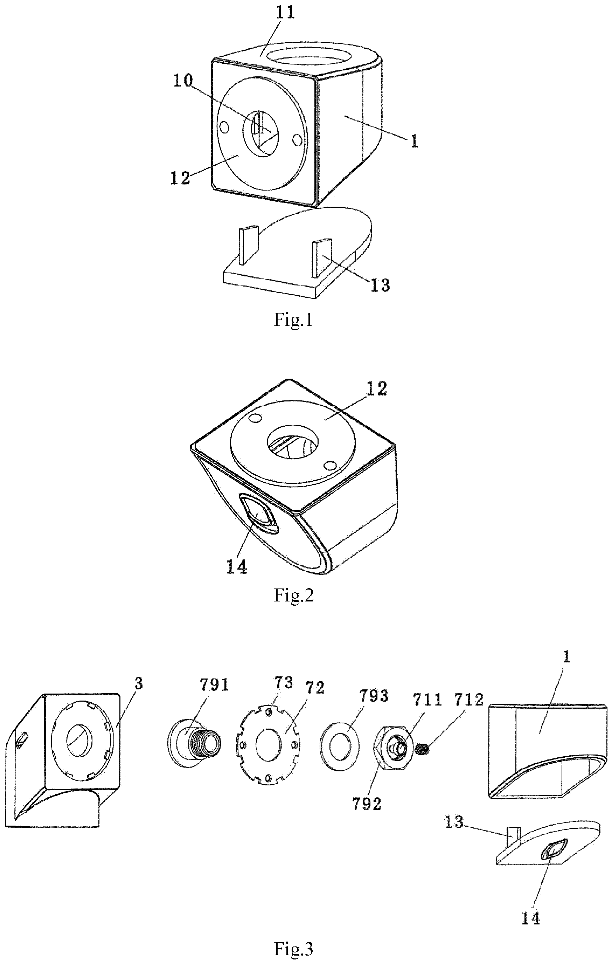

As shown in FIG. 1 to FIG. 4, the present disclosure provides preferred embodiments of a transfer adapting device, where the transfer adapting device comprises an adapting body 1 with a hollow cavity 10. The adapting body 1 comprises a bracket connecting portion 11 disposed on a top of the adapting body and a handle connecting portion 12 disposed on a side of the adapting body. The bracket connecting portion is connected with a cradle head support; the handle connecting portion is connected to rotate with a handle. The present disclosure uses the above transfer adapting device so that the cradle head support can be folded rotationally to be parallel to the handle when the shooting stabilizer is put away, which greatly shortens an overall length of the shooting stabilizer, reduces the volume and is convenient to carry and store.

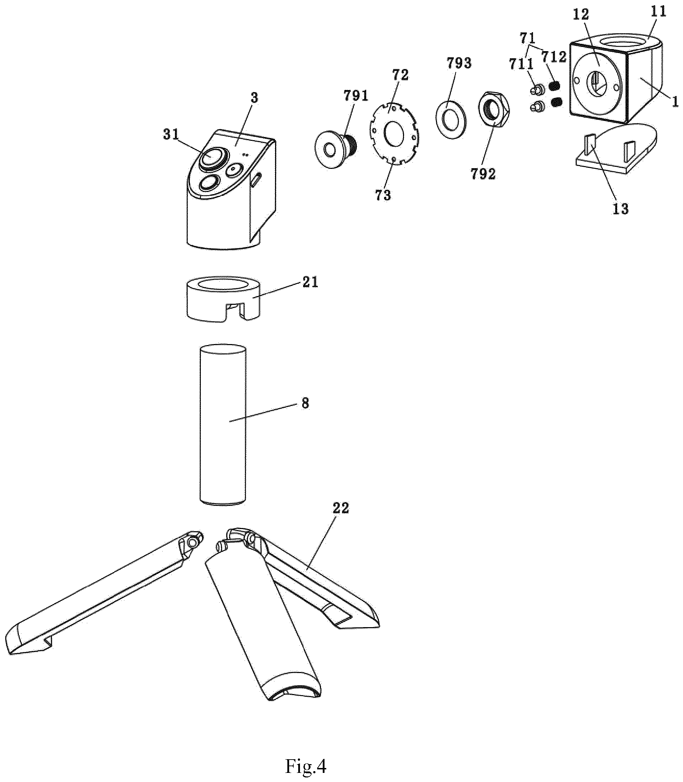

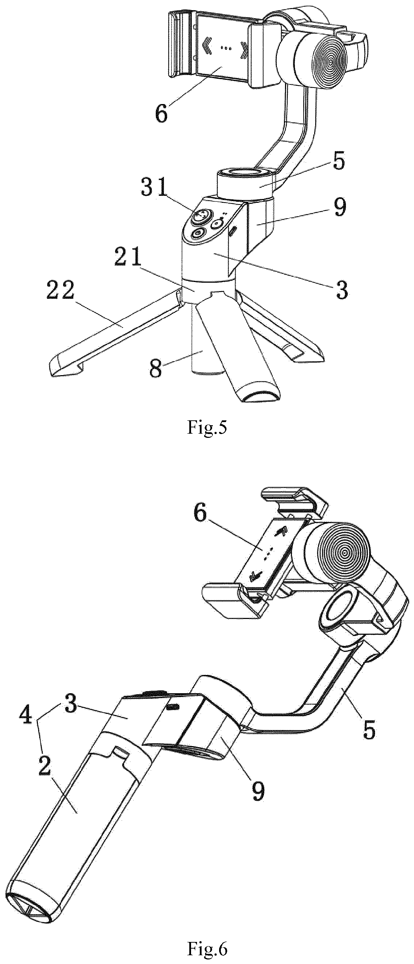

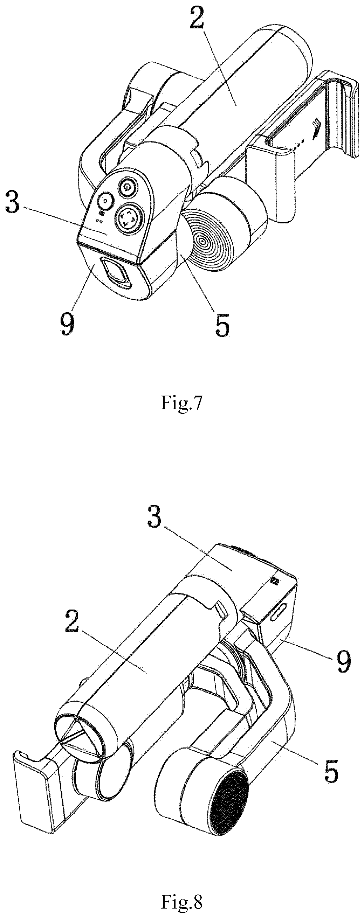

Furthermore, in one embodiment, as shown in FIG. 1 and FIG. 4, a locking mechanism is disposed on the adapting body and is used to lock the handle. In one embodiment, the locking mechanism comprises a locking tongue 13 and a locking tongue switch 14 disposed on a bottom of the adapting body 1. The locking tongue 13 is disposed and moving in the hollow cavity 10 of the adapting body 1 and the locking tongue switch 14 locks or unlocks the handle by driving movement of the locking tongue 13. The slide of the locking tongue switch drives up-and-down movement of the locking tongue, further operating with a rotating shaft of the handle connecting portion rotated with the handle, in order to lock the handle. Furthermore, a position of the handle position is locked, which avoids the handle from rotating relative to the handle connecting portion. For example, the shooting stabilizer in any one of the status shown in FIG. 5 to FIG. 8 can lock the handle by the locking mechanism to avoid the handle from rotating relative to the handle connecting portion. It should be understood, in other embodiments, length of the locking tongue can increase, and the locking tongue can directly act on the handle to lock the handle tightly when the locking tongue was pushed up.

Furthermore, as shown in FIG. 5 to FIG. 8, the present disclosure further provides the shooting stabilizer, and the shooting stabilizer comprises the handle 4 and the cradle head support 5. The cradle head support 5 is connected to rotate with the handle 4 by the transfer adapting device 9. An upper end of the bracket connecting portion is connected with the cradle head support and the handle connecting portion is connected with the handle. In one embodiment, the shooting stabilizer can further comprise a clamping device 6 disposed on the cradle head support 5.

Furthermore, in one embodiment, as shown in FIG. 3 and FIG. 4, the shooting stabilizer further comprises a rotary positioning mechanism disposed between the handle 4 and the transfer adapting device 9 and the rotary positioning mechanism is used to locate a rotating position when the handle 4 rotates. Furthermore, the rotary positioning mechanism comprises two spring colliding beads fixedly disposed on the handle connecting portion 12, which can realize a 90-degree rotary positioning. Obviously, in other embodiments, numbers of the spring colliding beads can be different, such as three or four. To be specific, the spring colliding bead 71 comprises a colliding bead 711 and a spring 712. Furthermore, the rotary positioning mechanism further comprises a friction plate 72 fixedly disposed on the handle 4. The friction plate 72 is provided with four concave holes 73, the concave holes 73 match with the spring colliding beads 71. The friction plate can increase a rotating resistance, and is not easy to wear which avoid the handle damage due to a frequent rotation, and increases the shooting stabilizer's service life. It should be understood, in other embodiments, numbers of the concave holes can be different and match with the spring colliding beads. The details are not described herein.

Furthermore, in one embodiment, as shown in FIG. 3, FIG. 4 and FIG. 6. The handle 4 comprises a handle body 2 and a mounting base 3 disposed at an upper end of the handle body 2, and the transfer adapting device 9 is connected rotationally with a side portion of the mounting base 3 by the rotating shaft. Furthermore, in one embodiment, the rotating shaft is a spiral component and comprises with a bolt 791, a screw nut 792 and a gasket 793. As shown in FIG. 4 and FIG. 5, a button key 31 is disposed on a top of the mounting base 3.

Furthermore, in one embodiment, as shown in FIG.4 and FIG. 5. The handle body 2 is a hollow structure. A battery compartment 8 is disposed in the handle body 2. Furthermore, as shown in FIG. 4 and FIG. 5, the handle body 2 comprises a hinge portion 21 and 3 equally-divided arc-shaped handle portions 22 hinged at a lower end of the hinge portion 21. One end of the battery compartment 8 is fixedly disposed in the hinge portion 21. Of course, in other embodiments, the arc-shaped handle portion can be further provided as other numbers, such as 4. The battery compartment can not only install a battery but also play a role in a framework supporting when the arc-shaped handle portion is opened to form a tripod so that the shooting stabilizer can stand independently.

Furthermore, it should be understood, the cradle head support provided by the present disclosure can be a one-shaft, a two-axis or three-axis, and controls the direction of rotation correspondingly by a motor. For example, for the three-axis, a shooting equipment can be driven to rotate in an X-axis direction, a Y-axis direction and a Z-axis direction by the corresponding three motors. The details are not described herein.

It should be understood, the embodiments above are only used to illustrate the technical solutions of the present disclosure, and not for limitation thereto. The personnel skilled in this field can modify the technical solutions recorded in the embodiments or replace parts of the technical features equivalently. But any modifications and equivalent substitutions are intended to be made within the protective scope of the appended claims of the present disclosure.

## Claims

1. A transfer adapting device, comprising an adapting body with a hollow cavity; wherein the adapting body comprises a bracket connecting portion disposed on a top of the adapting body and a handle connecting portion disposed on a side of the adapting body; the bracket connecting portion is connected with a cradle head support; the handle connecting portion is connected to rotate with a handle.

2. The transfer adapting device according to claim 1, wherein a locking mechanism is disposed on the adapting body and locks the handle.

3. The transfer adapting device according to claim 2, wherein the locking mechanism comprises a locking tongue and a locking tongue switch disposed on a bottom of the adapting body; the locking tongue is disposed and is moving in the hollow cavity of the adapting body; the locking tongue switch locks or unlocks the handle by driving movement of the locking tongue.

4. A shooting stabilizer, comprising a handle and a cradle head support; wherein the cradle head support is connected to rotate with the handle by the transfer adapting device of any one of claim 1, claim 2, and claim 3.

5. The shooting stabilizer according to claim 4, further comprising a rotary positioning mechanism; the rotary positioning mechanism is disposed between the handle and the transfer adapting device, and locates a rotating position when the handle rotates.

6. The shooting stabilizer according to claim 5, wherein the rotary positioning mechanism comprises at least one spring colliding bead; the spring colliding bead is fixedly disposed on a handle connecting portion.

7. The shooting stabilizer according to claim 6, wherein the rotary positioning mechanism further comprises a friction plate; the friction plate is fixedly disposed on the handle and is provides with at least one concave hole; the concave hole matches with the spring colliding bead.

8. The shooting stabilizer according to claim 4, wherein the handle comprises a handle body and a mounting base disposed at an upper end of the handle body; the transfer adapting device is connected rotationally with a side portion of the mounting base by a rotating shaft; a button key is disposed on a top of the mounting base.

9. The shooting stabilizer according to claim 8, wherein the handle body is a hollow structure and a battery compartment is disposed in the handle body.

10. The shooting stabilizer according to claim 9, wherein the handle body comprises a hinge portion and a plurality of arc-shaped handle portions hinged at a lower end of the hinge portion; one end of the battery compartment is fixedly disposed in the hinge portion.
